# EUROPEAN PATENT APPLICATION

(11) **EP 4 571 389 A1**
(43) Date of publication of application: **18.06.2025**
(21) Application number: 23275176.8
(22) Date of filing: 15.12.2023
(51) Int. Cl.: G02B 27/01

(54) **ASSEMBLY OF A HEAD WORN DISPLAY**

(71) Applicant: BAE SYSTEMS plc, London SW1Y 5AD (GB)
(72) Inventor: The designation of the inventor has not yet been filed

(57) **Abstract**

A method for assembling a head worn display is described. The method comprises fixing a display source, relay lens arrangement, first mirror and combiner to a chassis using mechanical reference features to define their positions. Having performed this operation, an intermediate mirror is inserted into an optical path formed by the display source, relay lens arrangement, first mirror and combiner, wherein the intermediate mirror is inserted into the optical path between the first mirror and the combiner. The position of the intermediate mirror is adjusted while monitoring an optical image generated by the head worn display and then the intermediate mirror is fixed to to the chassis in a position giving an optimal optical image.

## Description

### FIELD

The present invention relates to a method of assembling a head worn display.

### BACKGROUND

Assembling a head worn display, and in particular the optical train within the head worn display, is a time-consuming process. Tolerances in various components (e.g. lenses, mirrors, etc.) can impair the system performance unless they are compensated for as part of the assembly process.

### SUMMARY

According to an aspect of the present invention, there is provided a method for assembling a head worn display comprising: fixing a display source, relay lens arrangement, first mirror and combiner to a chassis using mechanical reference features or other external reference features to define their positions; inserting an intermediate mirror into an optical path formed by the display source, relay lens arrangement, first mirror and combiner, wherein the intermediate mirror is inserted into the optical path between the first mirror and the combiner; adjusting a position of the intermediate mirror while monitoring an optical image generated by the head worn display; and fixing the intermediate mirror to the chassis in a position giving an optimal optical image.

By selecting the intermediate mirror as a compensating element and positioning it whilst monitoring the optical image generated by the head worn display, it avoids the need to have flexible electrical connections. Furthermore, by selecting the mirror as compensating element, there is only a single compensation operation required for each independent optical train (i.e. for each eye) even if the display source comprises multiple displays (e.g. one display source for each of red, green and blue light). This reduces the complexity of the assembly process and the time taken to assemble the head worn display.

The intermediate mirror may be mounted on a manipulator element and the position of the intermediate mirror is adjusted using the manipulator element.

Monitoring an optical image may comprise monitoring one or more pre-defined parameters of the optical image.

The intermediate mirror may be inserted into the optical path between the first mirror and the combiner and close to an intermediate focal plane.

Adjusting a position of the intermediate mirror while monitoring an optical image generated by the head worn display may comprise adjusting a position of the intermediate mirror in up to six degrees of freedom while monitoring an optical image generated by the head worn display.

The intermediate mirror may have optical power.

The intermediate mirror may be shaped to match a field of view of the display source.

Fixing a display source, relay lens arrangement, first mirror and combiner to a chassis using mechanical reference features to define their positions may comprise: fixing each element in the optical train other than the intermediate mirror to the chassis using only mechanical reference features to define their positions.

The display source may comprise a plurality of displays.

A second aspect provides a head worn display comprising: a chassis; and an optical path comprising a display source, a relay lens arrangement, a first mirror, an intermediate mirror and a combiner, wherein the display source, relay lens arrangement, first mirror and combiner are fixed to the chassis in positions defined using a passive alignment process.

The display source, relay lens arrangement, first mirror and combiner may be fixed to the chassis in positions defined using only mechanical reference features or external reference features.

The intermediate mirror may be positioned in the optical path between the first mirror and the combiner and close to an intermediate focal plane.

The intermediate mirror may be fixed to the chassis in a position defined in an active assembly operation.

The intermediate mirror may have optical power.

The intermediate mirror may be shaped to match a field of view of the display source.

The head worn display may be assembled using the method as described above.

### BRIEF DESCRIPTION OF THE FIGURES

Embodiments of the invention will now be described by way of example only with reference to the figures, in which:
Figure 1 shows a schematic diagram of an example optical train for a head worn display;
Figure 2 shows the footprint of a select set of angles from the field of view of the display source of figure 1 when incident upon the front surface of the intermediate mirror;
Figure 3 shows an example method for assembling a head worn display such as that shown in figure 1;
Figure 4 shows a different view of the example optical train for a head worn display shown in figure 1;
Figure 5 shows a schematic diagram of a display in the display source of figure 1; and
Figure 6 shows a schematic diagram of the apparatus used to perform the compensation operation as part of the assembly of on an example head worn display such as that shown in figure 1.

### DETAILED DESCRIPTION

As described above, assembling a head worn display, and in particular the optical train within the head worn display, is a time-consuming process. Tolerances in various components (e.g. lenses, mirrors, etc.) can impair the system performance unless they are compensated for as part of the assembly process. Consequently, the assembly process typically involves one or more active compensation operations in which one or more final elements of the optical train are to be fixed in place, these may be referred to as a 'compensating elements'. These elements are manipulated into position whilst the system performance is monitored. During the compensation operation, the display system may display one or more test patterns to assist with the performance monitoring whilst the one or more compensating elements are manipulated (i.e. the position of one or more of the compensating elements is changed). Once the performance of the system has been optimised in terms of one or more predefined parameters (e.g. resolution and/or brightness), then the one or more compensating elements are fixed in its final position.

The one or more compensating elements are described above as being the 'final element(s)'; however, the term 'final' does not refer to the element's position within the optical train but instead to the order in which the elements in the optical train are fixed in position. As part of the assembly process, elements in the optical train other than the one or more compensating elements may be fixed in position based on mechanical features on the elements and in the housing, such as seating features and reference flats, or using other external references (e.g. an external laser) and only the compensation element is manipulated and actively aligned (i.e. aligned at the same time as monitoring the optical performance of the optical train).

Described herein is an improved method for assembling a head worn display in which the compensating element (or one of the compensating elements, where there are more than one) is a reflective element, such as a mirror, that is positioned at or close to an intermediate focal plane of the optical train of the head worn display. Consequently, the assembly method comprises fixing in place each other element within the optical train (including the display source) based on mechanical features and then manipulating the mirror to optimise system performance in an active compensation operation before fixing it in position (e.g. using adhesive, clamping members or other means).

As part of the assembly process, elements in the optical train other than the mirror that is the compensating element (and any other compensating elements, where there is more than one) may be fixed in position based on mechanical features on the elements and in the housing, such as seating features and reference flats, or using other external references (e.g. an external laser source) and only the mirror that is the compensation element is manipulated and actively aligned (i.e. whilst monitoring the optical performance of the optical train). Shims, spacers and mechanical jigs may be used when positioning elements other than the compensating element, such that these elements other than the compensating element are only positioned based on mechanical reference features.

By selecting a mirror as the compensating element (or as one of the compensating elements where there is more than one), it avoids the need to have flexible electrical connections, as would be the case if the display source was the compensating element, wherein the display source would be moved through multiple axes in space, hence requiring the associated electrical connections to have a suitable freedom of movement. As the mirror is a reflective, rather than a refractive, element, its positioning has no impact on the colour performance of the system and the compensation affects all wavelengths of light in the optical system equally. Furthermore, by selecting the mirror as compensating element, there is only a single compensation operation required for each independent optical train (i.e. for each eye) even if the display source comprises multiple displays (e.g. one display source for each of red, green and blue light), instead of a compensation operation for each of the multiple displays (e.g. three compensation operations per eye). This reduces the complexity of the assembly process and the time taken to assemble the head worn display.

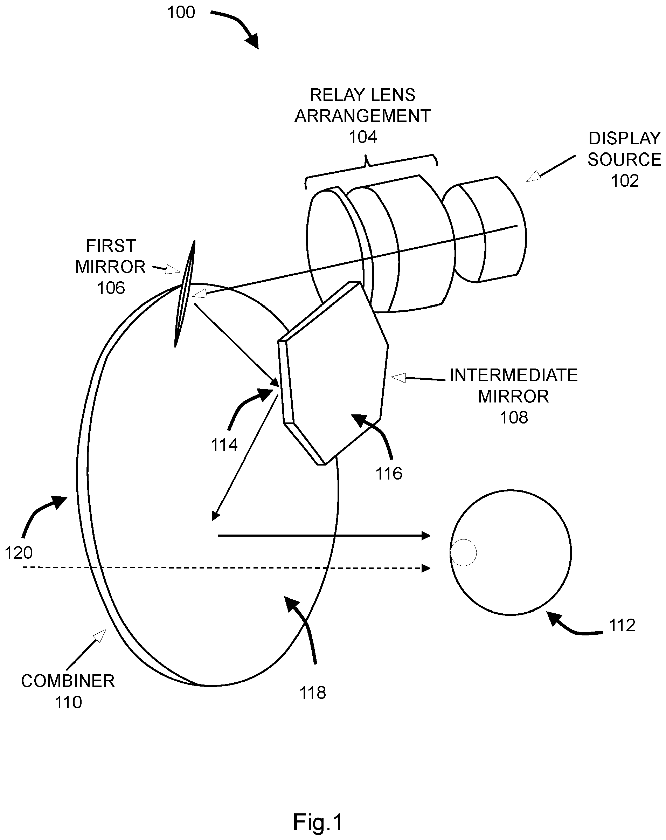

Figure 1 shows a schematic diagram of an example optical train for a head worn display. It will be appreciated that a head worn display may comprise two independent optical trains, each one as shown in figure 1, with one optical train for each eye and with the two optical trains being complementary mirror-image arrangements such that a binocular display can be created. The optical train 100 comprises a display source 102, a relay lens arrangement 104, a first mirror 106, an intermediate mirror 108 and a combiner 110. Figure 1 also shows the position of the wearer's eye 112.

The display source 102 comprises one or more displays, each display comprising a plurality of self-emissive pixels (e.g. mLEDs, OLEDs, etc.). As described above, where the display source 102 comprises a plurality of displays, this may comprise three displays, one for each of the colours red, green and blue. The use of multiple displays (rather than a single display) may enable provision of a high luminance, full colour display.

The relay lens arrangement 104 may comprise a plurality of lenses (as shown in figure 1) or a single lens. These lenses may be made of any appropriate material (e.g. plastic or glass). The relay lens arrangement 104 is positioned on the optical path between the display source 102 and the first mirror 106. The relay lens arrangement 104 directs the light output by the display source 102 towards the first mirror 106 and has a focal plane that is near or close to the front face of the intermediate mirror 108. In implementations where the first mirror 106 has optical power, the combination of the relay lens arrangement 104 and first mirror 106 form the focal plane that is near or close to the front face of the intermediate mirror 108. Any light that is output by the display source 102 but not transmitted by the relay lens arrangement 104 is mostly absorbed in the relay lens arrangement, thus controlling stray light emitted by the image source.

The first mirror 106 serves to fold the optical path between the display source 102 and the combiner 110 in order that it is more compact. This results in a smaller, lighter and less bulky head worn display that is consequently more comfortable to wear. This is particularly important where the head worn display is worn for long periods of time and/or used in space-constrained environments (e.g. within an aircraft). The first mirror 106 includes at least one partially reflective surface (either the front or rear face of the mirror). The first mirror 106 may be positioned at or near to an aperture location of the optical arrangement, which is between the relay lens arrangement 104 and the intermediate mirror 108 and may be shaped such that the first mirror 106 limits the light which makes it to the exit pupil presented to the user, by also acting as an optical aperture.

The partially reflective surface of the first mirror 106 may be partially transparent to one or more wavelengths. As a result, the light passed through the optical device is filtered by reflecting only certain optical wavelengths to limit what wavelengths are directed toward the combiner 110, which can be beneficial as the optical coating applied to the combiner 110 can be optimised to perform over a discrete set of wavelengths as opposed to the full set of wavelengths emitted by the display or image source. This can help to reduce the impact the optical coating has on the view of the real world, as seen by a user, for example by maximising transmission of the coating across the visible spectrum of wavelengths.

The intermediate mirror 108 is positioned between the first mirror 106 and the combiner 110 such that its front face 114 is at or close to a focussed image plane, as described above. This image plane may be referred to as an intermediate image plane since it lies between the display source 102 and the wearer's eye 112. The front face 114 of the intermediate mirror 108 is the face of the mirror on which the light reflected by the first mirror 106 is incident. Like the first mirror 106, the intermediate mirror 108 serves to fold the optical path between the display source 102 and the combiner 110 in order that it is more compact. By having two mirrors 106, 108 in the optical path, the optical path can be folded around the head of the wearer and can be tilted and/or rotated in more than one axis. In addition, the front face 114 of the intermediate mirror 108 may not be flat, but may instead be convex or concave in shape such that it has optical power (i.e. it has a focussing effect on the light incident upon its front face). Where the intermediate mirror 108 has optical power it therefore assists in forming the image viewed by the wearer. The front face 114 of the intermediate mirror 408 may also be decentred and tilted relative to the optical axis of the system. Different combinations of power, tilt and decentring are used depending upon the required layout and/or configuration of the device. Arranging the intermediate mirror 108 to be tilted can also help to compensate aberrations induced by the tilted combiner 110.

Either the front surface 114 or rear surface 116 of the intermediate mirror 108 is reflective. In a first case the intermediate mirror 108 comprises a reflective front surface where the light undergoes a surface reflection from the reflective front surface. In a different case the first mirror includes a transmissive front surface 114 and reflective rear surface 116, wherein light passes through the mirror and undergoes a surface reflection from the rear surface and passes back via the front surface 114, in this case the element acts like a traditional lens with reflective rear (or back) surface, adding additional degrees of freedom to the design. Where the rear surface is the reflective surface, the rear surface 116 may not be flat, but may instead be convex or concave in shape such that it has optical power (i.e. it has a focussing effect on the light incident upon its front face).

As the intermediate mirror 108 is located near to an intermediate image plane of the optical design, its size and shape assist in defining or limiting the field of view of the image presented to the user. The intermediate mirror 108 receives and directs the light toward the combiner 110. When light is not reflected by the mirror it does not continue to make it toward the combiner 100 and the eye 112 of the wearer, and instead may be absorbed by the surrounding chassis or support, thereby ameliorating the control of stray light. Consequently, the intermediate mirror 108 also shapes and/or limits the visible field of view presented to a user, by acting as an optical aperture.

The combiner 110 receives light reflected by the intermediate mirror 108 and redirects light towards the wearer's eye 112. The combiner may comprise a non-spherical surface form, tilted about at least a first axis (e.g. the X axis) and may also be decentred in the perpendicular axis (e.g. the Y axis), i.e. the central ray in the field of view does not strike the centre of the optical surface form. The combiner 110 is arranged to redirect one or more wavelengths toward the user to allow the user to view a virtual display created by the optical device simultaneously with the outside world (e.g. light rays that pass through the combiner 110 indicated by the dotted arrow in figure 1). The combiner 110 is arranged to redirect light incident upon it by use of an optical coating applied over at least a portion of the surface of the combiner 110. The coating is ideally applied over the whole surface, alternatively only the "optically active" region of the combiners could be coated e.g. only where the rays incident from the intermediate mirror 108 are likely to hit the combiner 110 and not elsewhere on the surface where rays incident from the intermediate mirror 108 are unlikely to hit. The non-spherical shape is used to compress the size of the overall system and help balance for system aberrations. Because the combiner is tilted it induces optical aberrations into the image light.

Aberrations are caused specifically because the combiner 110 is off-axis to the linear path of light, these aberrations can include spherical, coma, astigmatism and distortion. The combiner 110 is tilted to redirect the light correctly and if it was not correctly tilted the light would not be sent towards the eye. Using just a spherical surface form limits the degrees of freedom of optical correction in the design, allowing the combiner 110 to have a more complicated surface form, e.g. the biconic surface, thus allows additional degrees of freedom to better balance the system aberrations including those caused by the fact the combiner is tilted.

The use of a biconic surface form has a number of benefits. A different radius in both the X and Y axis allows for different optical power in both axes, and also the introduction of a conic contribution in both the X and Y axes. The conic contribution changes the spherical form into alternate surface form shapes dependent upon the value of the conic contribution, such as elliptical, hyperbolic or parabolic which are more eccentric in terms of shape and help to compress the ray bundle of the reflected light into a smaller bundle as compared to a typical spherical surface form, therefore compressing the size of the optical system.

The combiner 110 includes a first optical surface form on its inner surface 118 and a different second optical surface form on its outer surface 120, to minimize deviations to the outside world view 414. The surface form on the outer surface 120 is described by a different set of optical parameters to the inner surface 118. The outer surface 120 is generally not co-axial to the inner surface 118 and the thickness between the two surfaces varies across the area of the combiner 110. The surface forms are generally described by a different radius and conic constant in the X and Y axis such that they both are biconic with differing optical prescriptions. In some cases the surface forms could have additional complexity, as described by a multiple order polynomial function or through the inclusion of aspheric form contributions.

In addition to an optical coating, the combiner 110 is generally arranged to redirect the light through the use of one of the following optical elements applied over an area of the combiner: a holographic optical element, a diffractive optical element, or an optical microstructure (none of which are shown in figure 1). The use of these optical technologies can provide additional degrees of freedom to the system to redirect or orientate the ray bundle of light in a manner which could not be achieved through the use of a reflective coating alone. As an example a holographic or diffractive optical element could redirect the light at more extreme angles, in accordance with the laws of diffraction, without having to induce a further tilt to the combiner element, as would be needed if only a reflective optical coating is used wherein the design is limited by the laws of reflection.

In some cases the combiner 110 is made of a plastics material and as mentioned above includes coatings having various function. The result is a efficient and highly transmissive component which is very well suited for use in the augmented reality optical design. In most cases the combiner 110 has a transmissivity suitable to view an augmented reality view of symbology and the outside world. If the optical device is to be used in a virtual environment the transmissivity of the combiner can be reduced to close to zero.

It will be appreciated that a head worn display comprises a mechanical chassis (not shown in figure 1) which supports the elements shown in figure 1 and holds them in alignment with each other. For a binocular head worn display, the chassis supports two independent optical trains as shown in figure 1, one for each eye of the wearer, with one optical train being the complementary mirror image of the other.

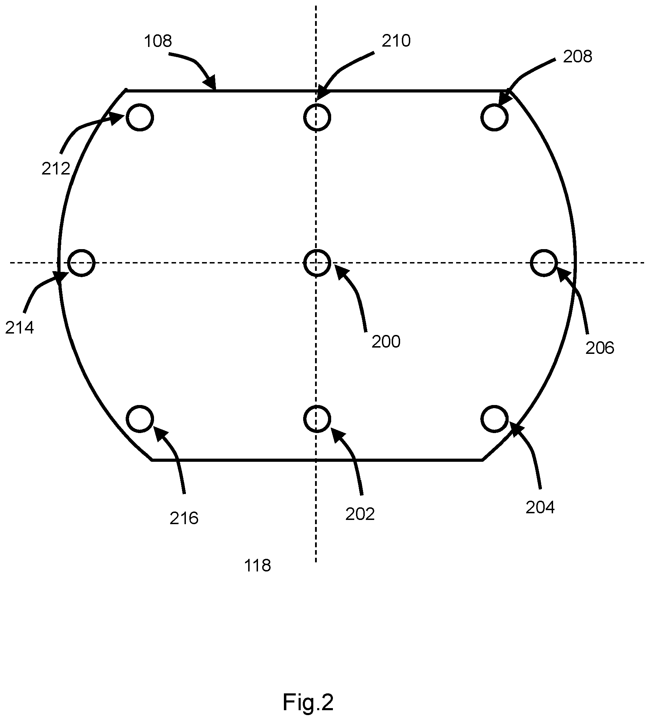

Figure 2 shows the footprint, in the form of various spots 200-216, of a select set of angles from the field of view of the display source 102 incident upon the front surface 114 of the intermediate mirror 108. In the example shown in figure 2, the intermediate mirror 108 is truncated to a shape which matches the display field of view (a truncated circle). By matching the shape of the intermediate mirror 108 to the display field of view at that point on the optical path, the intermediate mirror 108 also acts as an aperture and reduces stray light that propagates along with optical path. Any light that is not reflected by the intermediate mirror 108 may be absorbed by the chassis.

The intermediate image plane does not necessarily have to achieve a perfect optical focus, and some defocus across the display field of view may be apparent depending upon implementation.

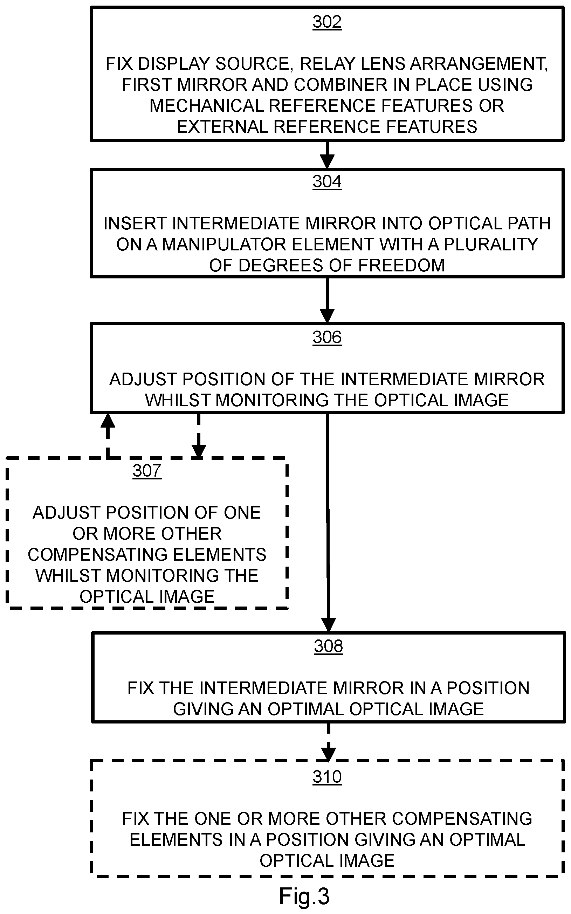

Figure 3 shows an example method for assembling a head worn display such as that shown in figure 1. As shown in figure 3, the method comprises fixing all of the optical elements in the optical train except for the one or more compensating elements (i.e. the display source 102, relay lens arrangement 104, first mirror 106 and combiner 110) in place using mechanical or external reference features (block 302). Where mechanical features are used, these mechanical reference features include at least one mechanical reference feature on the particular element (i.e. display source, first mirror or combiner) and at least one mechanical reference feature in the supporting mechanical chassis. One or more (or each) of these elements are fixed in a pre-defined location with reference flats / faces on the element resting on, or otherwise in contact with, datum faces and edges in the supporting mechanical chassis. When positioning an element (in block 302), spacers, shims or other mechanical jigs may be used to define a fixed position of the element relative to the supporting mechanical chassis using only mechanical reference features. The display source 102, relay lens arrangement 104, first mirror 106 and combiner 110 may be fixed in place in any order and may use any suitable fixing means (e.g. adhesive, clamping members, screws, etc.). Where external features are used, these may involve active optical feedback using a fixed external laser or other light source (i.e. a light source which is not part of the head worn display but has a fixed position within, for example, an assembly jig), such that features are located based on how they reflect the light. Irrespective of whether mechanical reference features or external reference features are used, the fixing of these elements is performed in a passive operation, i.e. the display source 102 is not powered up and the optical performance of the system is not monitored.

In an active compensation operation (blocks 304-308) is then performed after the passive operation (in block 302). In the active compensation operation, the intermediate mirror 108 is inserted into the optical path of the head worn display on a manipulator element (e.g. a manipulator stack or arm) which enables the intermediate mirror to be moved with multiple degrees of freedom and preferably with six degrees of freedom (block 304). The position of the intermediate mirror 108 is adjusted using the manipulator element whilst the image generated by the head worn display is monitored (block 306). The monitoring may be implemented using a camera placed at the position of the system design eye or exit pupil, where the wearer's eye would be located.

The image generated by the hard worn display during the compensation operation (block 306) may comprise a series of test images that enables one or more pre-defined parameters (e.g. display focus, resolution quality, image brightness) to be monitored.

Once the intermediate mirror has been moved into a position that provides an optimal optical image, as determined based on the one or more pre-defined parameters of the image (e.g. resolution and/or brightness of the image), then the intermediate mirror is fixed in position (block 308), e.g. using adhesive or any other fixing means (e.g. clamps and screws, solder, etc.). The optimal image may be defined as an image having an optimum combination of values of the one or more pre-defined parameters (e.g. an optimum value of each of the one or more pre-defined parameters, or where the overall difference between values of the one or more pre-defined parameters and their corresponding optimum values is minimised).

As described above, in some implementations there may be more than one compensating element, i.e. there may be one or more additional compensating elements in addition to the intermediate mirror 108. In such examples, there may be an additional loop in the method of figure 3 (as indicated by the dotted arrows) in which the positions of one or more other compensating elements are adjusted (block 307) and then the position of the intermediate mirror is rechecked and may be further adjusted (in block 306). It will be appreciated that where there are one or more additional compensating elements, they will also be fixed in position once aligned to give an optimal optical image (block 310).

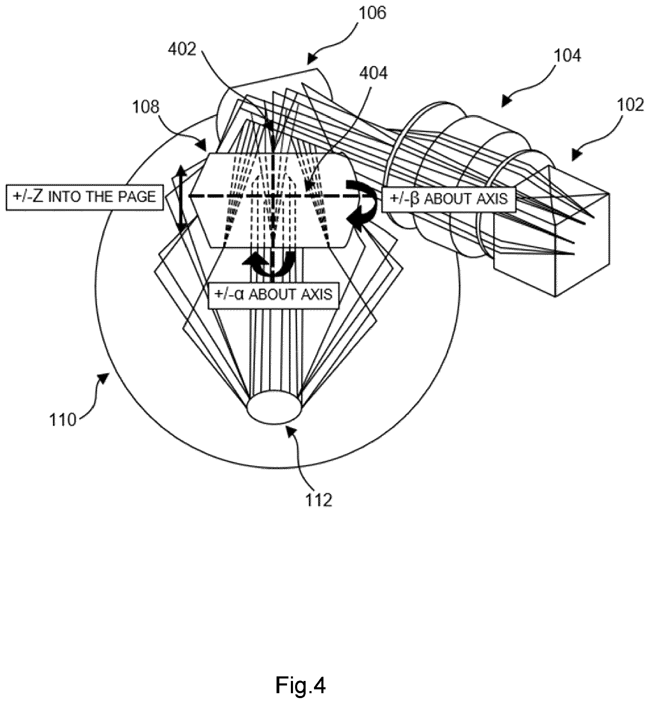

Figure 4 shows a different view of the example optical train for a head worn display shown in figure 1. In this view the six degrees of freedom in which the intermediate mirror 108 can be moved (in block 306) when mounted on the manipulator element are labelled. These degrees of freedom can be described with reference to three axes which are defined relative to the intermediate mirror 108. The first axis 402 and the second axis 404 are in the plane of the intermediate mirror 108 and perpendicular to each other (shown vertically and horizontally respectively in the orientation of figure 4) and to the optical axis of the optical train. If the display source has a display area which is approximately rectangular or a truncated circle (as is the case in the example shown in figure 2), then the first and second axes correspond to the axes of symmetry of the display area when imaged onto the intermediate mirror 108. The third axis is aligned with the optical axis of the optical train and is perpendicular to both the first and second axes (i.e. into the page in the orientation of figure 4).

The intermediate mirror 108 can be tilted about the first (e.g. vertical) axis 402 (left right rotation) to achieve +/- α adjustment. This provides an operator focus adjustment across this axis, i.e. tilt correction. The intermediate mirror 108 can be tilted about the second (e.g. horizontal) axis 404 (up down rotation) to achieve +/- β adjustment. This provides an operator focus adjustment across this axis, i.e. roll correction. The intermediate mirror 108 can be moved forward and aft along the third axis (i.e. the optical axis of the system) to achieve +/-Z adjustment. This provides an operator with global focus adjustment. As described above, as the intermediate mirror 108 is a reflective surface, not a refractive surface, movement about any of these axes has no impact on colour performance of the system, and the above compensation (i.e. the movement in any of the six degrees of freedom) affects all wavelengths of light in the optical system (i.e. all wavelengths of light output by the display source 102) equally.

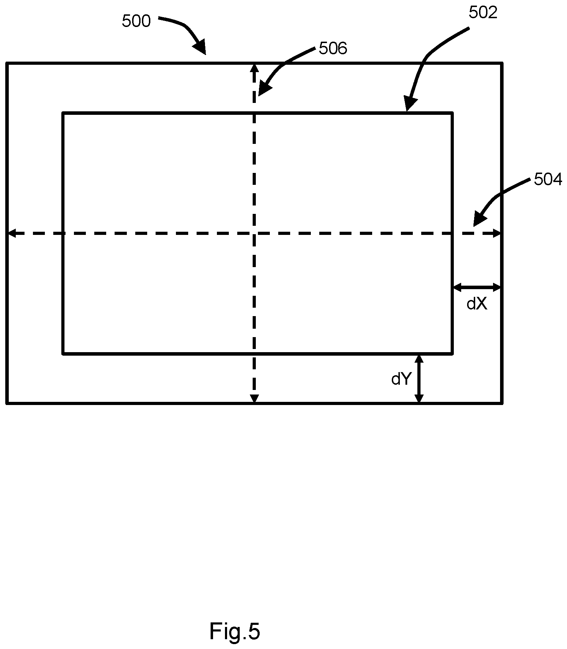

The movement of the intermediate mirror 108 as described above (in block 306) does not allow for left/right/up/down adjustment to achieve +/-X or +/-Y adjustment of the display field of view which can typically be utilised to move the display field of view to enable centering of the display field of view based on an outside world reference, this can be referred to as a boresighting process. To counteract this the optical system is designed to have adequate tolerance to allow a fully digital boresight correction, i.e. the one or more displays that form the display source are sized such that they are larger than the display area and the position of the display area can be moved digitally on the display to provide the left/right/up/down adjustment, as can be described with reference to figure 5.

Figure 5 shows a schematic diagram of a display 500 in the display source 102. As described above, the display source 102 may comprise one or more displays 500 and in some examples the display source 102 may comprise three displays 500, one emitting red light, one emitting green light and the third emitting blue light, these displays can be combined optically using an arrangement of optical filters or prisms. Figure 5 also shows a display area 502 which is smaller than the actual display 500, which means that in use the pixels that are outside the display area 502 are not used to form the image that is projected to the wearer's eye 112. To perform boresight correction (i.e. to adjust the position of the centre of the display field of view in the +/-X or +/-Y directions, as indicated by arrows 504, 506), the position of the display area 502 on the display 500 is adjusted. Where there are multiple displays 500, the display area 502 on each display 500 may be adjusted. The difference in size between the display 500 and the smaller display area 502 (labelled dX and dY in figure 5) may be selected so that they are equal to, or exceed, the maximum expected boresight adjustment in each axis.

Whilst not shown in figure 3, the method of figure 3 may further comprise a digital or optical boresighting operation (e.g. immediately prior to block 308).

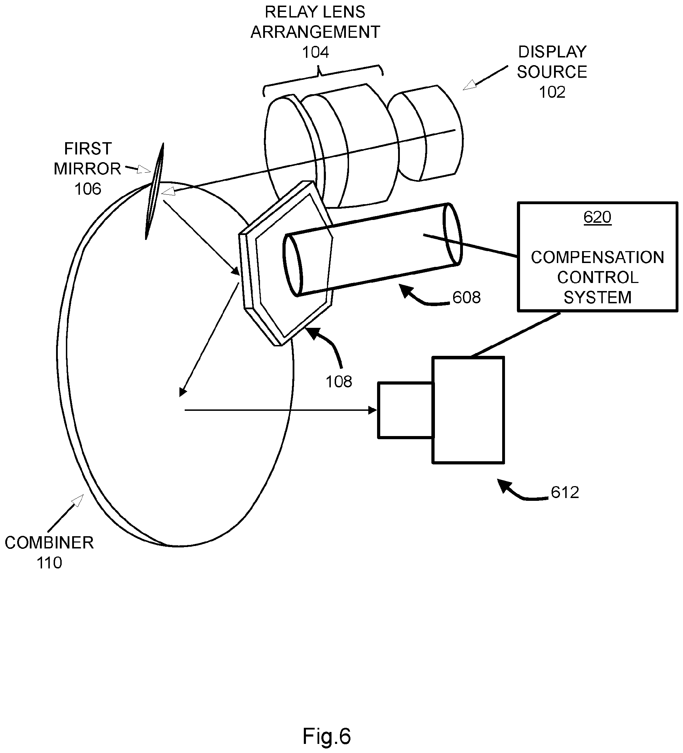

Figure 6 shows a schematic diagram of the apparatus used to perform the compensation operation as part of the assembly of on an example head worn display such as that shown in figure 1. The intermediate mirror 108 is mounted on a manipulator element 608 and the image generated by the system is captured by a camera 612. The adjustment and monitoring (in block 306) may be an automated process with a closed feedback loop implemented by a compensation control system 620 that monitors the optical image captured by the camera 612 and in response, controls the position and movement of the manipulator element 608. The compensation control system 620 may analyse the image captured by the camera 612 to quantify the one or more pre-defined parameters (e.g. resolution and/or brightness) and then adjust the position of the manipulator element 608 to bring the intermediate mirror 108 into a position that results in optimum values of the one or more pre-defined parameters. Once in this position, the intermediate mirror 108 may be fixed in place, e.g. by an operator or by a robotic arm (e.g. that dispenses adhesive), not shown in figure 6.

As described above, by using the intermediate mirror 108 as the compensating element, instead of the display source 102, it avoids the need to have flexible electrical connections between the displays and electrical connections attached to the chassis of the head worn device. This reduces the complexity of the head worn display and improves its reliability and robustness. Furthermore, by selecting the intermediate mirror 108 as the compensating element, there is only a single compensation operation required for each independent optical train (i.e. for each eye) even if the display source comprises multiple displays (e.g. one display source for each of red, green and blue light), instead of a compensation operation for each of the multiple displays (e.g. three compensation operations per eye). This reduces the complexity of the assembly operation and reduces the time taken to assemble the head worn display.

In examples where there is more than one compensation element, the compensation elements may include, in addition to the intermediate mirror 108, an additional reflective element (e.g. a second mirror that is not shown in the figures) and/or one of the lenses in the relay lens arrangement (i.e. not the entire lens arrangement but one of the lenses within it, e.g. a lens within the relay lens arrangement with a tight tolerance).

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

## Claims

1. A method for assembling a head worn display comprising:
fixing a display source, relay lens arrangement, first mirror and combiner to a chassis using mechanical reference features or other external reference features to define their positions (302);
inserting an intermediate mirror into an optical path formed by the display source, relay lens arrangement, first mirror and combiner (304), wherein the intermediate mirror is inserted into the optical path between the first mirror and the combiner;
adjusting a position of the intermediate mirror while monitoring an optical image generated by the head worn display (306); and
fixing the intermediate mirror to the chassis in a position giving an optimal optical image (308).

2. The method according to claim 1, wherein the intermediate mirror is mounted on a manipulator element and the position of the intermediate mirror is adjusted using the manipulator element.

3. The method according to any of the preceding claims, wherein monitoring an optical image comprises monitoring one or more pre-defined parameters of the optical image.

4. The method according to any of the preceding claims, wherein the intermediate mirror is inserted into the optical path between the first mirror and the combiner and close to an intermediate focal plane.

5. The method according to any of the preceding claims, wherein adjusting a position of the intermediate mirror while monitoring an optical image generated by the head worn display comprises adjusting a position of the intermediate mirror in up to six degrees of freedom while monitoring an optical image generated by the head worn display.

6. The method according to any of the preceding claims, wherein the intermediate mirror has optical power.

7. The method according to any of the preceding claims, wherein the intermediate mirror is shaped to match a field of view of the display source.

8. The method according to any of the preceding claims, wherein fixing a display source, relay lens arrangement, first mirror and combiner to a chassis using mechanical reference features to define their positions comprises:
fixing each element in the optical train other than the intermediate mirror to the chassis using only mechanical reference features to define their positions.

9. The method according to any of the preceding claims, wherein the display source comprises a plurality of displays.

10. A head worn display comprising:
a chassis; and
an optical path comprising a display source (102), a relay lens arrangement (104), a first mirror (106), an intermediate mirror (108) and a combiner (110),
wherein the display source, relay lens arrangement, first mirror and combiner are fixed to the chassis in positions defined using a passive alignment process.

11. A head worn display according to claim 10, wherein the display source, relay lens arrangement, first mirror and combiner are fixed to the chassis in positions defined using only mechanical reference features or external reference features.

12. The head worn display according to claim 10 or 11, wherein the intermediate mirror is positioned in the optical path between the first mirror and the combiner and close to an intermediate focal plane.

13. The head worn display according to any of claims 10-12, wherein the intermediate mirror is fixed to the chassis in a position defined in an active assembly operation.

14. The head worn display according to any of claims 10-13, wherein the intermediate mirror has optical power.

15. The head worn display according to any of claims 10-14, wherein the intermediate mirror is shaped to match a field of view of the display source.

16. The head worn display according to any of claims 10-15, wherein the head worn display is assembled using the method of any of claims 1-9.
